# EUROPEAN PATENT APPLICATION

(11) **EP 1 170 880 A1**
(43) Date of publication of application: **09.01.2002**
(21) Application number: 00981672.9
(22) Date of filing: 13.12.2000
(51) Int. Cl.: H04B 7/10, H04B 7/08, H04B 7/06, H04B 7/26, H01Q 3/26

(54) **RADIO BASE STATION DEVICE AND RADIO COMMUNICATION METHOD**

(30) Priority: 14.01.2000 JP 2000005671
(71) Applicant: MATSUSHITA ELECTRIC INDUSTRIAL CO., LTD., Kadoma-shi, Osaka 571-8501 (JP)
(72) Inventor: MIYA, Kazuyuki, Asao-ku, Kawasaki-shi, Kanagawa 215-0021 (JP)
(74) Representative: Grünecker, Kinkeldey, Stockmair & Schwanhäusser Anwaltssozietät
(86) International application number: JP0008800
(87) International publication number: WO0154311

(57) **Abstract**

Weights are not calculated by using signals of the preamble section in a random access channel (RACH), but signals of the preamble section of the RACH are received by an adaptive array antenna (AAA) with a plurality of directivity patterns using the existing weights, delay profiles are prepared for respective directivity patterns, and the preamble section and despreading timing are detected by using the delay profiles. Further, the invention is featured in that a control signal in an acquisition indication channel (AICH) is received by the AAA with a directivity pattern that is selected when receiving the signals of preamble section of the RACH by the AAA.

## Description

### Technical Field

The present invention relates to a base station apparatus and a method for wireless communications, which are used in a digital wireless communication system, and in particular pertains to adaptive array antenna receiving (hereinafter called "AAA") of a RACH (Random Access CHannel) and AAA transmission of an AICH (Acquisition Indication CHannel) in a DS-CDMA (Direct Sequence-Code Division Multiple Access) system.

### Background art

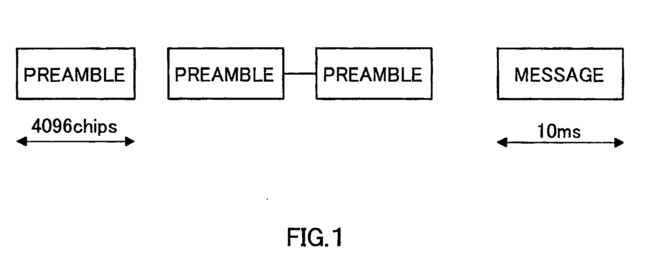

Conventionally, a random access channel (RACH) has been used for transmission in uplink signals in paging of a communication terminal such as a mobile station and packet transmission having a slight amount of transmission. As shown in Fig. 1, the RACH is constructed so that, after a preamble section equivalent to a length of, for example, 4096 chips or so is transmitted once or a plurality of times, a message section equivalent to a length of, for example, 10ms or so is transmitted.

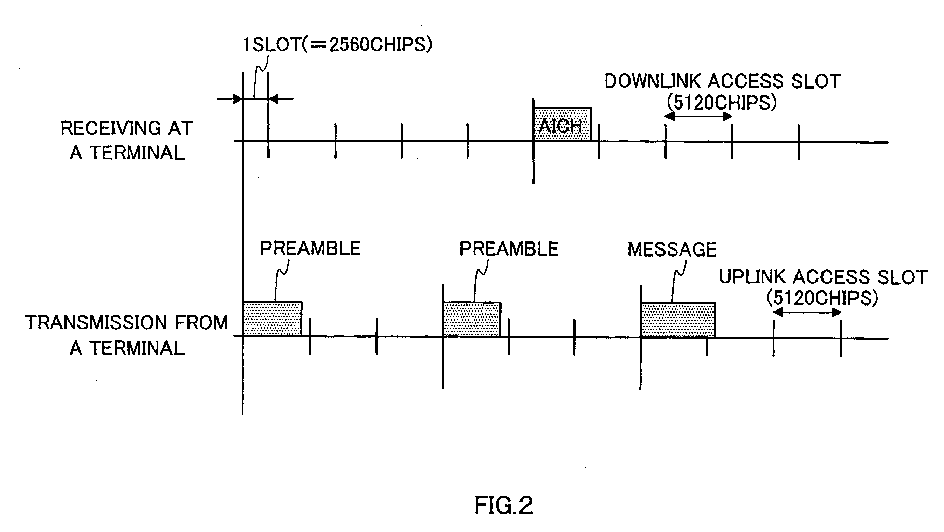

Availability of the preamble section of the RACH as for receiving at a base station is recognized by a communication terminal as to whether or not transmission is made by the AICH in a downlink. That is, the communication terminal transmits the preamble section to the base station of the RACH for example, when paging. The base station transmits a control signal for confirmation to the communication terminal by the AICH immediately after the base station receives the preamble section. When the receiving is not enabled, no AICH transmission is carried out. When the AICH corresponding to its own preamble section is not received within a prescribed duration of time, the communication terminal generally raises its transmission power and transmits the preamble section again. Thus, the communication terminal transmits a message section to the base station of the RACH after the transmission of the preamble section has been carried out several times until the receiving is made by the AICH. Fig.2 shows the timing of receiving and transmission at the communication terminal side.

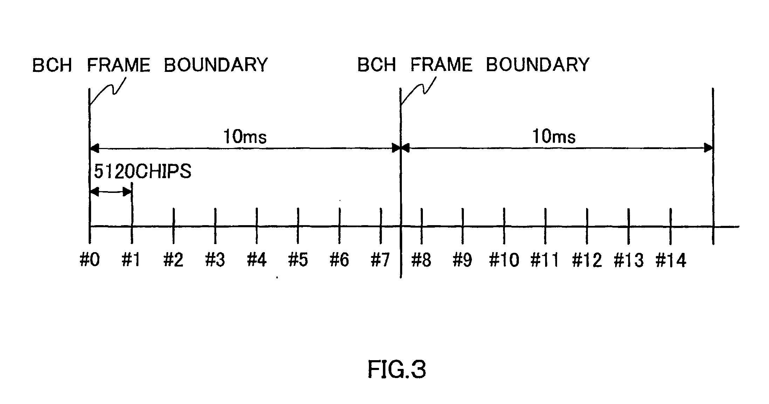

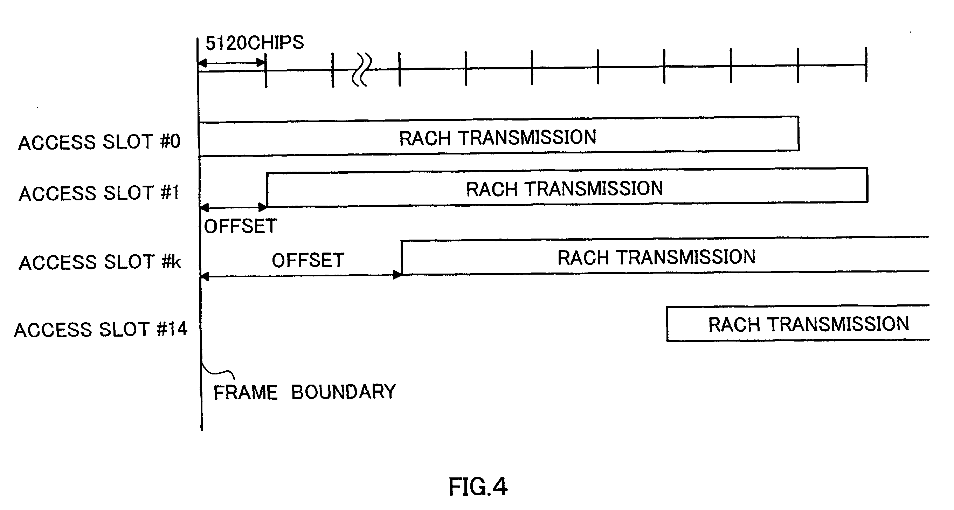

In Fig.2, the access slots of the uplink are determined to be an appointed number, for example, #0 through #14 as shown in Fig.3. As shown in Fig.4, offsets that are different from each other are given to the respective access slots. In a cell to which a communication terminal belongs, an effective access slot is broadcast on broadcast channel. Therefore, the communication terminal takes an offset corresponding to the broadcast access slot into consideration and carries out RACH transmission at the timing.

As for the transmission and receiving that are made by the RACH and AICH, it is preferable that, in order to suppress interference with other stations, the transmission and receiving are carried out by using an adaptive array antenna (AAA). However, since the time from the receiving of the preamble section by the RACH to the transmission of a control signal by the AICH is short, it is difficult to introduce transmission and receiving using the AAA.

That is, generally, it is necessary that the allowance time of response (the arrival time of a signal of a preamble section + time required to judge a pattern of the preamble section + time required for transmission of a control signal corresponding to the judged pattern) from receiving of a signal by the RACH to transmission of a signal by the AICH in a base station is 1ms or less. Therefore, in the base station, it is difficult to calculate the receiving weight on the basis of the preamble section that has been received by the RACH. Resultantly, it is difficult to apply the AAA receiving to the receiving of the preamble section by the RACH.

Accordingly, in a system in which the AAA receiving is introduced, a base station will receive a preamble section by the RACH without any directivity. Thus, the preamble section is obliged to be received by the RACH without any directivity, and the preamble section needs an appointed higher SIR (Signal to Interference Ratio) or Eb/N0 in comparison with other signals received by the AAA. As a result, it becomes necessary to increase the transmission power for transmission of a preamble section by the RACH to satisfy the channel for a high quality at a communication terminal.

In order to increase the transmission power, interference with other stations will be increased. Also, where RACH is frequently used, the power consumption at a communication terminal will be increased since the transmission power is increased. Further, at the base station, since it is difficult to estimate a direction of arrival of a signal of the preamble section by the RACH due to the same reason as above, it becomes difficult to carry out transmission by an AAA in regard to the AICH transmission corresponding thereto. Therefore, a necessity arises in that non-directivity transmission is made by using higher transmission power than the AAA transmission. Resultantly, interference with other stations will be increased in the AAA transmission in the downlinks.

### Disclosure of Invention

It is therefore an object of the invention to provide a base station apparatus and a method for wireless transmission that are capable of achieving AAA receiving by a RACH and AAA transmission by an AICH and are able to reduce interference with other stations.

A subject matter of the invention is to detect an already known signal section and to detect despreading timing by receiving an already known signal section of a RACH by an AAA on the basis of a plurality of directivity patterns, which are set in advance, and selecting one in a correlation level in respective directivity patterns, without calculating the weight by using an already known signal section (preamble section) of the RACH. The correlation level is detected by preparing a profile (delay profile) from correlation outputs and using the same. That is, a feature of the invention resides in that a control signal is transmitted through an AICH by an AAA by using a directivity pattern that is selected when receiving an already-known signal section through a RACH by the AAA.

### Brief Description of Drawings

Fig. 1 is a view showing a construction of RACH transmission;
Fig. 2 is a view showing the timing of transmission and receiving by means of RACH and AICH;
Fig. 3 is a view explaining an access slot;
Fig. 4 is a view explaining an offset for an access slot;
Fig. 5 is a block diagram showing a construction of a base station apparatus according to a first embodiment of the invention;
Fig. 6 is a view showing a case where directivity receiving is employed for a RACH;
Fig. 7 is a block diagram showing a construction of a base station apparatus according to a second embodiment of the invention; and
Fig. 8 is a block diagram showing a construction of a base station apparatus and a wireless transmission unit, which carries out wireless communications, according to the invention.

### Best Mode for Carrying Out the Invention

Hereinafter, a description is given of embodiments of the invention with reference to the accompanying drawings.

### (Embodiment 1)

In the present embodiment, a description is given of a case where a signal of a preamble section is received by an AAA through a RACH with a plurality of directivity patterns that have been set in advance by using an existing weight, a delay profile is prepared for the respective directivity patterns, and by using the delay profile, the preamble section is detected, and despreading timing is detected. Also, in the embodiment, a description is given of a case where the number of antennas for receiving signals by AAA is made into three, a plurality of channels (users) are grouped by using an uplink signal as the existing weight, and a common weight (grouped weight) is used in the same group.

In addition, herein, in order to simplify the description, it is assumed that the number (n) of groups in grouping a plurality of channels is 2, and the number (k) of channels is also 2.

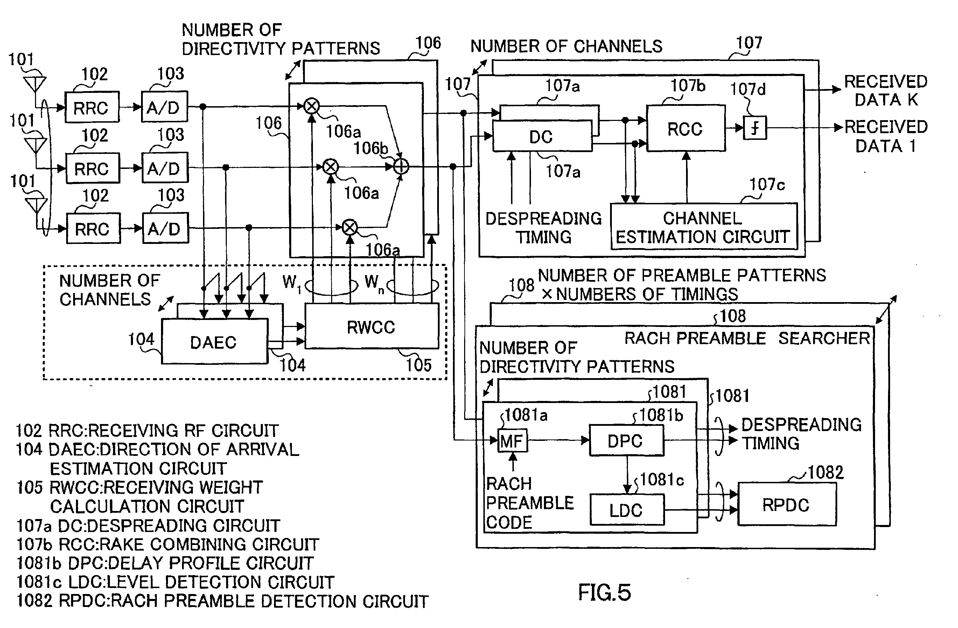

Fig. 5 is a block diagram showing a construction of a base station apparatus according to the first embodiment of the invention.

Uplink signals that are received by an antenna 101 are, respectively, inputted into a receiving RF line 102. In the receiving RF line 102, the received signals are down-converted. The down-converted signals are analog-digitally converted by an A/D converter 103 and are made into base band signals.

The base band signals are, respectively, sent into a direction of arrival estimation circuit 104 and are further sent into a directivity controlling circuit 106. Herein, receiving directivity controlling circuits 106 are provided (by two) equivalently to the number of directivity patterns corresponding to the number of groups when a plurality of channels are grouped. Also, direction of arrival estimation circuits 104 are provided (by two) equivalently to the number of channels (number of users).

In the direction of arrival estimation circuits 104, direction of arrivals are estimated with respect to the signals received by the respective channels (users ) . The result of estimation of the direction of arrivals is sent into a receiving weight calculation circuit 105. In the receiving weight calculation circuit 105, channels are grouped on the basis of direction of arrivals of the respective channels, and the group-by-group receiving weight is calculated.

In the receiving directivity controlling circuit 106, the received signals are processed on the basis of an AAA by using group-by-group receiving weights, which are obtained by the receiving weight calculation circuit 105. And, the received signals processed on the basis of the AAA are outputted to demodulating circuits 107 and RACH preamble searchers 108 with respect to respective received directivities. Also, demodulation circuits 107 are provided (herein by two) equivalent to the number of channels, and RACH preamble searchers 108 are provided equivalent to the number of products obtained by multiplying the number of preamble patterns by the number of timings.

In the demodulation circuits 107, a despreading process and a RAKE combining process are carried out with respect to the signals received by the AAA (107a-107d), wherein receiving data 1 and receiving data k (number of channels: herein, 2) are obtained.

In the RACH preamble searcher 108, a delay profile is prepared for the respective receiving directivities, wherein a preamble and despreading timing are detected on the basis of the delay profile.

A description is given of a motion of AAA receiving made by RACH in a base station apparatus having the above-described construction. As regards RACH transmission from a communication terminal, the transmission is carried out by the construction as shown in Fig. 1. And, the communication terminal transmits a preamble section of RACH and a message section thereof to the base station apparatus at the timing as shown in Fig. 2.

Where a base station apparatus according to the invention receives the preamble section of RACH, which has been transmitted from a communication terminal, the apparatus receives it with a receiving directivity pattern obtained in advance, that is, the receiving directivity pattern formed by the existing receiving weight.

For example, a directivity pattern that is formed by a weight (grouped weight) made common in the same group, in which a plurality of channels (users) are grouped by using uplink signals, may be used as the receiving directivity pattern obtained in advance.

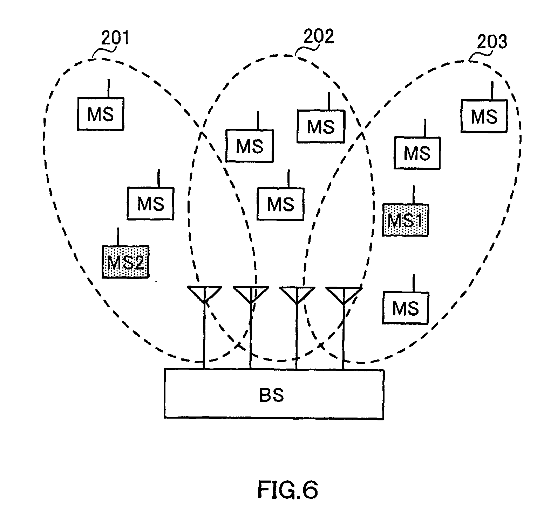

In detail, a direction of arrival is estimated on the basis of signals coming from respective communication terminals of individual physical channels in the direction of arrival estimation circuit 104, the respective communication terminals are grouped (classified) into a plurality of groups 201 through 203 as shown in Fig. 6, on the basis of the respective direction of arrivals in the receiving weight calculation circuit 105, and the receiving weights are calculated group by group. Since it is possible to decrease the number of receiving directivity patterns by using the grouped weights as described above, it is possible to reduce the amount of calculation to calculate the receiving weight.

In addition, the receiving weight to form the receiving directivity pattern obtained in advance is not limited to the above-described grouped weights. It is not limited as long as it is any one of the existing weights . For example, a receiving weight of a fixed receiving directivity pattern that is merely established in advance may be used as the existing weight. For example, a weight of the receiving directivity pattern that is spatially uniformly divided may be used.

The preamble section of RACH is received by the antenna 101 and is down-converted by the receiving RF circuit 102. After that, it is converted to a digital signal by an A/D converter 103 and becomes a base band signal. In a multiplier 106a of the receiving directivity controlling circuit 106, the base band signal is multiplied by the existing weights (herein, grouped weights) W1, Wn (n: number of groups), which are obtained by the receiving weight calculation circuit 105. Signals that are multiplied by these weights are added by an adder 106b. Also, multipliers 106a are provided (herein, by three) so as to correspond to the number of antennas. Thus, the preamble section of RACH is received by an AAA with the receiving directivity pattern formed by the existing receiving weights (grouped weights).

The preamble section of RACH that has been received by the AAA is sent to a RACH preamble searcher 108. In the RACH preamble searcher 108, a delay profile is prepared for respective directivity patterns by respective detection circuits 1081. The respective detection circuits 1081 calculate a correlation between the RACH preamble sections and the already-known RACH preamble codes by a matched filer 1081a, and on the basis of the result of the correlation calculation, delay profiles are prepared by a delay profile circuit 1081b, and despreading timing is obtained by the delay profiles that are prepared by the delay profile circuits 1081b. The despreading timing may be used for demodulation of a message (data) section of a RACH described later.

The delay profiles that are prepared by the delay profile circuit 1081b are sent to a level detection circuit 1081c. In the level detection circuit 1081c, the level of a correlation peak is detected from the delay profiles, and information of the detected level is outputted to a RACH preamble detection circuit 1082. In the RACH preamble detection circuit 1082, a RACH preamble is detected on the basis of the result of the level detection. For example, where the detection level in a specified directivity pattern is a certain set threshold value or more, it is judged that the RACH preamble has been received . Further, in the preamble detection, although channel-by-channel separation of the same preamble patterns at the same timing is enabled in principle if the receiving timing slips by several chips, this may not be carried out in connection with the scale of hardware.

Thus, since, in the base station apparatus according to the present embodiment, a receiving directivity pattern is prepared by using the existing receiving weights, and there is no need to newly obtain a receiving directivity pattern from the received signals . Therefore, since receiving directivity patterns can be quickly formed, it becomes possible for the preamble section of RACH to be received by the AAA. Resultantly, it is possible to reduce the transmission power at a communication terminal side, and interference with other stations can be reduced when transmitting by the RACH. Also, where the RACH is frequently used, it is possible to reduce the power consumption of communication terminals.

Next, where a message section of the RACH is received, a receiving directivity pattern is formed by using a receiving weight (grouped weight) when having received the preamble section, and signals are received by the AAA with the receiving directivity patterns. In this case, the following methods may be listed, that is, a method for selecting the receiving directivity pattern, whose receiving state is the best, among the receiving directivity patterns detected when receiving the preamble section and receiving with the receiving directivity pattern, and a method for selecting several upper-digit receiving directivity patterns, whose receiving state is satisfactory, among the receiving directivity patterns detected when receiving the preamble section, and multiplexing the received signals in compliance with those receiving directivity patterns. Herein, the receiving state can be judged based on a size of the detection level (correlation peak) of the respective receiving directivity patterns.

In connection with demodulation of the RACH message section, despreading timing that has been obtained by the RACH preamble searcher 108 may be used. That is, the despreading timing, which is an output of the delay profile circuit 1081b of the RACH preamble searcher 108 may be used in a despreading circuit 107a of a demodulation circuit 107, whereby it is not necessary to detect the despreading timing in the demodulation circuit 107, and the amount of processing may be reduced.

With respect to the despreading timing, the RACH message section is buffered, and delay profiles are prepared again by using the message section. The despreading timing may be detected from the delay profiles . Also, the despreading timing that is obtained by the delay profile circuit 1081b of the RACH preamble searcher 108, and the despreading timing obtained from delay profiles that are prepared again are used, wherein reliability thereof is checked by using various types of parameters, and those having high reliability may be used as despreading timing. In this case, it is possible to detect the despreading timing having higher accuracy.

Thus, since a base station apparatus according to the present embodiment receives a message section through an AAA by using a receiving weight that has been selected when receiving a RACH preamble section, it is possible to reduce the transmission power in connection to the message section of the RACH at a communication terminal side, wherein it is possible to reduce interference with other stations when carrying out RACH transmission. Also, where the RACH is frequently used, it becomes possible to reduce the power consumption at the communication terminals.

### (Embodiment 2)

In this embodiment, a description is given of a case where a signal of the preamble section of a RACH is received by an AAA with a plurality of directivity patterns using the existing weights, delay profiles are prepared for respective directivity patterns, the preamble section and despreading timing are detected by using the delay profiles, and an AICH is used for transmission made by the AAA by using a receiving weight selected when receiving the preamble section of the RACH. Also, in the embodiment, a description is given of a case where it is assumed that the number of antennas for receiving by an AAA is three, the existing weights are employed, a plurality of channels (users) are grouped by using an uplink signal, and a weight (grouped weight) that is made common in the same group is used.

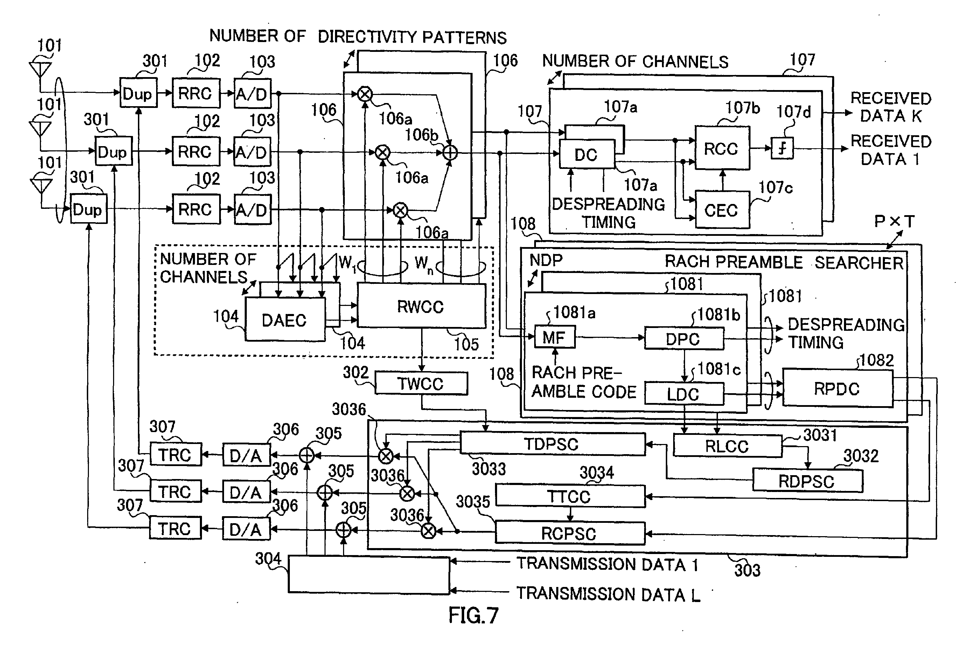

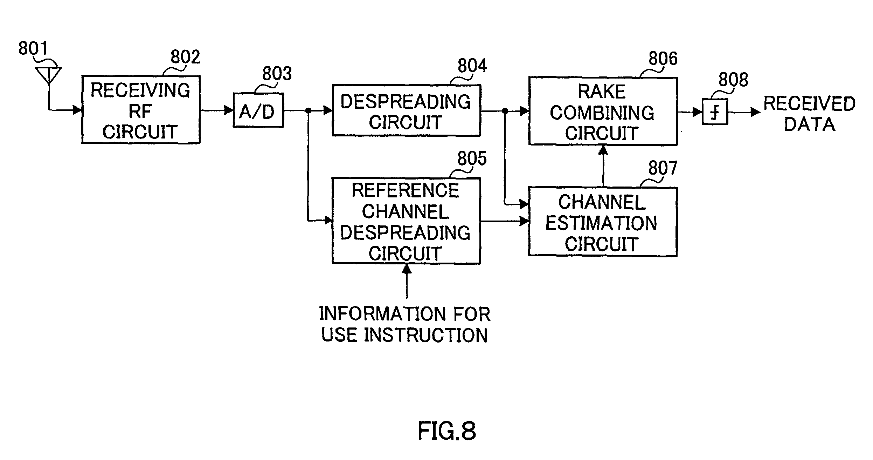

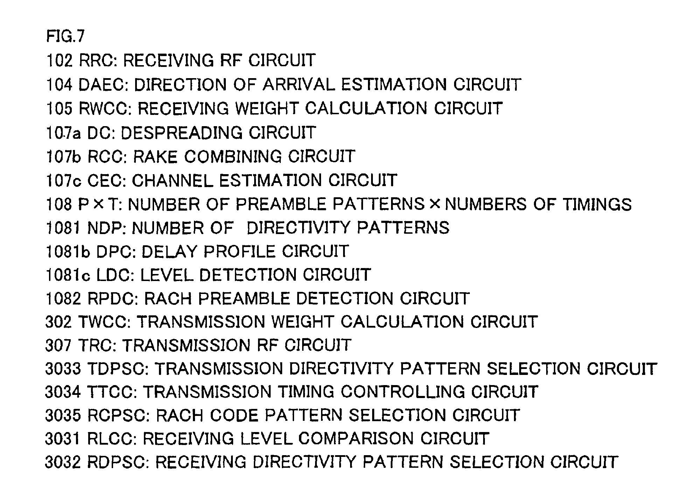

Fig. 7 is a block diagram showing a construction of a base station apparatus according to the second embodiment of the invention. Also, in Fig. 7, parts that are identical to those in Fig. 5 are given the same reference numbers, and detailed description thereof is omitted.

A base station apparatus shown in Fig. 7 is provided with a transmission weight calculation circuit 302 by which a transmission weight is obtained from a receiving weight that is used when receiving a preamble section of RACH by an AAA, and a transmission directivity controlling circuit 303 that controls the transmission directivity of an AICH based on an output from the RACH preamble searcher 108.

A description is given of a motion of the base station apparatus having the above-described construction.

The motions till receiving of the RACH preamble section through the AAA with the receiving directivity pattern formed by using the existing receiving weight, detecting the RACH preamble and detecting despreading timing are similar to those of the first embodiment. Therefore, the description is omitted.

The existing receiving weight (for example, grouped weight in the first embodiment) that has been obtained by the receiving weight calculation circuit 105 is outputted to the transmission weight calculation circuit 302. In the transmission weight calculation circuit 302, the transmission weight is calculated by using the existing receiving weight. Where the carrier frequency of the uplink differs from that of the downlink as in an FDD (Frequency Division Duplex) system, it is considered that a gap in the weight directivity resulting from a difference between the carrier frequencies is corrected, and a transmission weight having the same directivity as the characteristics that are obtained by multiplexing a plurality of receiving directivities is obtained. Also, the existing receiving weight may be used, as it is, for the transmission weight. The transmission weight is outputted to the transmission directivity pattern selection circuit 3033 of the transmission directivity controlling circuit 303.

On the other hand, a level that is detected by a level detection circuit 1081c of the RACH preamble searcher 108 is outputted to a receiving level comparison circuit 3031 of the transmission directivity controlling circuit 303. In the receiving level comparison circuit 3031, levels are compared with each other for the respective receiving directivity patterns. For example, an appointed threshold value is compared with the levels. The results of the comparison are outputted to the receiving directivity pattern selection circuit 3032.

The receiving directivity pattern selection circuit 3032 selects a receiving directivity pattern on the basis of the results of the comparison. For example, the circuit 3032 selects, as receiving directivity patterns, the pattern having the highest level, which exceeds the threshold value, and a plurality of patterns having higher levels that exceed the threshold value. Information about the selected receiving directivity patterns is outputted to the transmission directivity pattern selection circuit 3033.

The transmission directivity pattern selection circuit 3033 selects an optimal transmission directivity pattern among the transmission directivity patterns obtained by calculations from the receiving directivity patterns on the basis of the information of the selected receiving directivity patterns, and outputs the transmission weight of the transmission directivity pattern to a multiplier 3036. Also, as methods for selecting the transmission directivity pattern, a method for selecting a transmission directivity pattern having the same directivity as that in the case where, for example, one receiving directivity pattern is selected, and a method for selecting a transmission directivity pattern having a directivity that is obtained by multiplexing a plurality receiving directivity patterns where they are selected may be listed.

Information of the RACH preamble that is detected by the RACH preamble detection circuit 1082 of the RACH preamble searcher 108 is outputted to the transmission timing controlling circuit 3034 of the transmission directivity controlling circuit 303. The transmission timing controlling circuit 3034 determines transmission timing in response to the detected RACH preamble. And, the transmission timing is outputted to an AICH code pattern selection circuit 3035.

The AICH code pattern selection circuit 3035 selects an AICH code pattern corresponding to the RACH preamble that is detected by the RACH preamble detection circuit 1082, and outputs it to a multiplier 3036 at the determined transmission timing.

The multiplier 3036 multiplies a transmission weight of the transmission directivity pattern, which is selected by the transmission directivity pattern selection circuit 3033, by the AICH code pattern. The AICH code pattern that is multiplied by the transmission weight is outputted to an adder 305 and is multiplexed by other transmission data 1 through L, which are digitally modulated by a modulation circuit 304.

The multiplexed transmission data and AICH code pattern are converted to analog signals by a D/A converter 306, and are sent to a transmission RF circuit 307. The transmission RF circuit 307 carries out up-conversion with respect to the analog signal. The transmission signal is transmitted from an antenna 101 to a communication terminal through a duplexer 301.

Since the wireless base station apparatus according to the embodiment carries out AAA transmission through an AICH by using a receiving weight that is selected when receiving the RACH preamble section, the transmission power can be comparatively reduced with respect to the communication terminals, wherein interference with other stations can be reduced in the case of the AICH transmission.

### (Embodiment 3)

In this embodiment, a description is given of a case where AICH signals that are transmitted from the base station with directivity are received by communication terminals.

Where the AICH signal is not transmitted through AAA, estimation of the channel of AICH signals in communication terminals employs P-CPICH (Primary-Common Pilot CHannel). This is regulated in 3GPP (3^{rd} Generation Partnership Project).

However, where the AICH signals are transmitted through AAA, estimation of the channel in communication terminals needs a reference signal that is transmitted with the same directivity as the directivity used when transmitting the AICH signal. Therefore, in the embodiment, a description is given of a case where, when receiving the AICH signal that is transmitted through AAA, modulation is carried out by estimation of a channel using a reference signal that is transmitted with directivity without depending on a general non-directivity P-CPICH signal. Herein, a description is given of a case of using an S-CPICH (Secondary-CPICH) signal as the reference signal.

Fig. 8 is a block diagram showing a construction of a base station apparatus according to the invention and a communication terminal unit for wireless communications according thereto.

The AICH signals in the downlink, which are received by an antenna 801, are respectively inputted into a receiving RF circuit 802, wherein the AICH signals are transmitted from the base station with appointed directivity. In the receiving RF circuits 802, the received AICH signals are down-converted. The down-converted AICH signals are analog-digitally converted by an A/D converter 803 and become base band signals.

The base band signals are sent to a despreading circuit 804 where the base band signals are despread by using the same spreading symbol as the spreading symbol that is used in the base station. The despreading signals are outputted to a RAKE combining circuit 806 and a channel estimation circuit 807.

On the other hand, the S-CPICH signals in the downlink, which are received through an antenna 801, are respectively inputted into a receiving RF circuit 802. The S-CPICH signals are transmitted from the base station by AAA with the same directivity as that of the AICH signals. The received S-CPICH signals are down-converted in the receiving RF circuit 802. The down-converted S-CPICH signals are analog-digitally converted by an A/D converter 803 and become base band signals.

The base band signals are sent to a reference CH despreading circuit 805 where the signals are despread by using the same spreading symbol as that used in the base station. The despreading signals are outputted to a channel estimation circuit 807.

The channel estimation circuit 807 performs a channel estimation using the despreading signals of the AICH signals with reference to the despreading signals of the S-CPICH signals. The channel-estimation value, which is obtained by the channel estimation, is outputted to a RAKE combining circuit 806. The RAKE combining circuit 806 multiplexes the despreading signals of the AICH signals in terms of RAKE by using the channel-estimated value outputted from the channel interference circuit 807, and outputs the RAKE-combined signals to a judgement section 808. The judgement section 808 judges the RAKE-combined signals and outputs the received data.

In the communication terminal constructed as described above, the reference CH despreading circuit 805 switches a spreading symbol for reference CH and carries out a despreading process with respect to the received signal, on the basis of whether or not the AAA is applied to the received symbol.

That is, since the P-CPICH signal that provides information to the entire cells is made into a reference symbol with respect to the received signal to which the AAA is not applied, a despreading process is carried out by using a spreading symbol for P-CPICH. On the other hand, since the S-CPICH signal (a signal of a channel where transmission is made by AAA) that performs transmission to a part of the cells is made into a reference symbol with respect to the received signal to which the AAA is applied, that is, the AICH signals in the present invention, a despreading process is carried out by using a spreading symbol for S-CPICH.

Information for instructing the use regarding whether or not the AAA is applied, that is, whether or not the AAA is applied to the received signal and a signal of the channel that makes AAA transmission is used (instruction for carrying out demodulation by using a S-CPICH signal for channel estimation as a reference symbol) is recognized from an upper layer to the reference CH despreading circuit 805. Thereby, where the AAA is applied to the received signal, a signal of the channel that is used for the AAA transmission can be used as a reference symbol by using the spreading symbol of the channel. Resultantly, even where the AICH signals are transmitted by the AAA, it is possible to demodulate the AICH signals without fail.

Also, in the embodiment, although a description was given of the case where the S-CPICH signal was used as a reference signal, that is, a signal of the channel that is used for the AAA transmission with the same directivity as that of the AICH signals, signals of channels other than the S-CPICH may be used as long as they are signals of the channel that are used for the AAA transmission with the same directivity as that of the AICH signal.

The present invention is not limited to the Embodiments 1 through 3 described above, but may be subjected to various modifications. For example, in the three embodiments described above, a description is given of the case where the number of antennas is three, the number of channels (users) is two, and the number of groups is two when a plurality of users are grouped. However, the present invention may be similarly applied to a case where the number of antennas, number of channels and number of groups may be other numbers.

Further, in the Embodiments 1 through 3, a description was given of the case where a plurality of channels (users) are grouped by using an uplink signal as the existing receiving weight, and a grouped weight that is common in the same group is used. However, the present invention may be similarly employed in the case of using the existing receiving weights.

Abase station apparatus according to the invention employs a construction that includes an adaptive array antenna receiving section in which signals from communication terminals are received by an adaptive array antenna with a receiving directivity pattern obtained in advance; a correlation level detecting section for detecting a correlation level for respective receiving directivity patterns; and a detection section for detecting the already-known signal section (preamble section) of a random access channel signal by using the results of the above-described correlation level detection and the despreading timing of the above-described already-known signal section.

With the construction, since receiving directivity patterns are formed by using the existing receiving weights, it is not necessary to newly obtain any receiving directivity pattern from the received signals. Therefore, it is possible to quickly form a receiving directivity pattern, whereby it becomes possible to receive the already-known section of RACH by an AAA. As a result, it becomes possible to reduce the transmission power at the communication terminal side, and interference with other stations can be reduced when transmitting signals through the RACH. Further, where the RACH is frequently used, it is possible to decrease the power consumption at communication terminals.

The base station apparatus according to the invention employs, in the above-described construction, a structure in which the above-described receiving directivity pattern is a receiving directivity pattern, which is obtained group by group after the above-described respective communication terminals are grouped on the basis of a direction of arrival of signals from the respective communication terminals.

According to the construction, by using the directivity patterns, which are obtained group by group when having grouped communication terminals, in order to form the receiving directivity patterns, the number of the receiving directivity patterns can be reduced, wherein the amount of calculation to calculate the receiving weight can be decreased, and the number of delay profiles to be prepared may be decreased equivalent to a decrease in the number of the receiving directivity patterns, thereby reducing the amount of calculations.

The base station apparatus according to the invention employs, in the above-described construction, a structure that receives a message section of a random access channel by an adaptive array antenna with the above-described receiving directivity pattern.

With the construction, since the receiving directivity pattern of the already-known signal section of the RACH is used, it becomes possible to receive the message section of the RACH by the AAA. As a result, it becomes possible to reduce the transmission power at the communication terminal side, and interference with other stations can be reduced when transmitting through the RACH.

The base station apparatus according to the invention employs, in the above-described construction, a structure that includes a selection section for selecting a signal pattern corresponding to the already-known section of the above-described random access channel signal, and a transmission section for transmitting the above-described signal pattern with a transmission directivity pattern that is obtained on the basis of the above-described receiving directivity pattern.

With the construction, since transmission is made by the AAA through the AICH by using a receiving weight that is selected when receiving the already-known signal section of the RACH, it becomes possible to comparatively reduce the transmission power with respect to communication terminals, and interference on other stations can be reduced when transmitting through the AICH.

The base station apparatus according to the invention employs, in the above-described construction, a structure in which despreading timing of the already-known signal section of random access channel signals is used as the despreading timing of a message section continued from the above-described already-known signal section.

With the construction, the despreading timing with a specified directivity, which is obtained by receiving the already-known signal section of the RACH by the AAA, may be utilized as the timing for receiving the message section of the RACH by the AAA.

A communication terminal unit according to the invention is featured in carrying out wireless transmissions with the base station apparatus constructed as described above. With the construction, since the base station side receives a random access channel signal by the AAA, it becomes possible for the communication terminal unit sides to transmit the random access signals at comparatively small transmission power. Therefore, even where the RACH is frequently used, it becomes possible to reduce the power consumption of the communication terminals.

A method for wireless communications according to the invention comprises the steps of receiving signals from communication terminals by an adaptive array antenna with receiving directivity patterns obtained in advance, detecting a correlation level for the respective receiving directivity patterns; and detecting the already-known signal section of random access channel signals by using the above-described delay profiles and despreading timing of the above-described already-known signal section.

According to the method, since the receiving directivity patterns are formed by using the existing receiving weights, it is not necessary to obtain new receiving directivity patterns from the received signals. Therefore, since the receiving directivity patterns can be quickly formed, it becomes possible to receive the already-known signal section of the RACH through the AAA. As a result, the transmission power can be reduced at the communication terminal side, and interference with other stations can be suppressed when transmitting through the RACH. Also, where the RACH is frequently used, it becomes possible to reduce the power consumption at the communication terminals.

The method for wireless communications according to the invention further includes, in the above-described method, the steps of selecting a signal pattern corresponding to the already-known signal section of the above-described random access channel signal, and transmitting the above-described signal pattern with the transmission directivity pattern that is obtained on the basis of the above-described receiving directivity pattern.

According to the method, since transmission is made by the AAA through the AICH by using receiving weights that are selected when receiving the already-known signal section of the RACH, it becomes possible to make the transmission power comparatively small with respect to communication terminals, and interference with other stations can be suppressed when transmitting through the AICH.

As described above, with the base station apparatus and method for wireless communications according to the present invention, signals of the preamble section of the RACH are received by AAA with a plurality of directivity patterns using the existing weights, delay profiles are prepared for respective directivity patterns, the preamble section and despreading timing are detected by using the delay profiles, and a control signal is transmitted by the AAA through the AICH with the directivity pattern that is selected when signals of the preamble section are received by the AAA through the RACH. Therefore, the AAA receiving through RACH and AAA transmission through AICH can be achieved, and interference with other stations can be suppressed.

This application is based on the Japanese Patent Application No. HEI-12-005671 filed on January 14, 2000, entire content of which is expressly incorporated by reference herein.

### Industrial Applicability

The invention is applicable to a digital wireless communication system, in particular, to an adaptive array antenna receiving through a RACH and AAA transmission through an AICH in a DS-CDMA system.

## Claims

1. A base station apparatus comprising: an adaptive array antenna receiving means for receiving signals from communication terminals by an adaptive array antenna with a receiving directivity pattern obtained in advance; a correlation level detecting means for detecting a correlation level for said respective receiving directivity patterns; and a means for detecting said already-known signal section of a random access channel signal by using the results of the detection of correlation level and for detecting despreading timing of said already-known signal section.

2. The base station apparatus as set forth in Claim 1, wherein said receiving directivity pattern is a receiving directivity pattern, which is obtained group by group after said respective communication terminals are grouped on the basis of a direction of arrival of signals from said respective communication terminals.

3. The base station apparatus as set forth in Claim 1, wherein a message section of a random access channel is received by an adaptive array antenna with said receiving directivity pattern.

4. The base station apparatus as set forth in Claim 1, further including means for selecting a signal pattern corresponding to the already-known section of said random access channel signal, and means for transmitting said signal pattern with a transmission directivity pattern that is obtained on the basis of said receiving directivity pattern.

5. The base station apparatus as set forth in Claim 1, wherein despreading timing of said already-known signal section of random access channel signals is used as the despreading timing of a message section continued from the said already-known signal section.

6. A communication terminal unit for carrying out wireless transmission with a base station apparatus, wherein said base station apparatus includes: means for receiving signals from a communication terminal by an adaptive array antenna with a receiving directivity pattern obtained in advance, means for detecting a correlation level for said respective receiving directivity patterns; and means for detecting, by using the result of said correlation level detection, said already-known signal section of a random access channel signal and despreading timing of said already-known signal section.

7. A communication terminal unit, comprising: means for carrying out a despreading process with respect to a reference signal that is transmitted by an adaptive array antenna with the same directivity as that of the AICH signals transmitted from a base station apparatus by the AAA with a random access channel signal; means for estimating a channel of said AICH signal using an output of said despreading means; and means for demodulating said AICH signal using an output said channel estimating means.

8. The communication terminal unit as set forth in Claim 7, wherein said demodulating means is informed by an upper layer of an instruction that demodulation is carried out by using said reference signal for channel estimation.

9. A method for wireless communications, comprising the steps of:
receiving signals from communication terminals by an adaptive array antenna with the receiving directivity patterns obtained in advance;
detecting a correlation level for said respective receiving directivity patterns; and
detecting the already-known signal section of random access channel signals by using the result of said correlation level detection, and detecting despreading timing of said already-known signal section.

10. The method for wireless communications as set forth in Claim 9, further comprising the steps of:
selecting a signal pattern corresponding to the already-known signal section of said random access channel signal; and
transmitting said signal pattern with a transmission directivity pattern that is obtained on the basis of said receiving directivity pattern.
